(19)

Europäisches Patentamt
European Patent Office
Office européen des brevets

(11) **EP 1 878 957 B1**

(12) **EUROPEAN PATENT SPECIFICATION**

(45) Date of publication and mention
of the grant of the patent:
**28.11.2012   Bulletin 2012/48**

(51) Int Cl.:
*F16K 15/06* (2006.01)        *F16K 41/14* (2006.01)
*F16K 1/46* (2006.01)

(21) Application number: **07112325.1**

(22) Date of filing: **12.07.2007**

(54) **Valve mechanism for a thermo hydraulic system, particularly for high pressures**

Ventilmechanismus für ein thermohydraulisches System, besonders bei hohem Druck

Mécanisme de valve pour système thermo-hydraulique, en particulier pour hautes pressions

(84) Designated Contracting States:
**AT BE BG CH CY CZ DE DK EE ES FI FR GB GR HU IE IS IT LI LT LU LV MC MT NL PL PT RO SE SI SK TR**

(30) Priority:   **13.07.2006   IT UD20060174**

(43) Date of publication of application:
**16.01.2008   Bulletin 2008/03**

(73) Proprietor: **Record SpA**
**24040 Bonate Sotto (BG) (IT)**

(72) Inventors:
• **Gotti, Egidio**
**24010 Sedrina (BG) (IT)**

• **Marengo, Marco**
**24044 Dalmine (BG) (IT)**
• **Cossali, Gianpietro Elvio**
**24122 Bergamo (IT)**

(74) Representative: **Petraz, Gilberto Luigi et al**
**GLP S.r.l.**
**Piazzale Cavedalis 6/2**
**33100 Udine (IT)**

(56) References cited:
**DE-C- 511 264          US-A- 2 608 210**
**US-A- 2 960 998        US-A- 4 282 896**
**US-A1- 2003 188 784**

EP 1 878 957 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention concerns a valve mechanism, or valve, used in thermo hydraulic systems, particularly at high pressures, in the range between 20 and 200 bar, preferably between 100 and 200 bar, such as for example refrigeration and conditioning systems, in which a pressurized fluid flows, such as for example carbon dioxide ($CO_2$) oil or other fluid in general.

The present invention applies preferably, but not exclusively, in conditioning systems for automotive application.

In particular, the present invention concerns a valve having a geometry configured to optimize the deformation of its seal, in the conditions of maximum closure, so as to guarantee a good seal against the working pressures, to allow a greater duration over time and to prevent the seal from coming out of its seating.

BACKGROUND OF THE INVENTION

Valve mechanisms, or valves, are known, used in thermo hydraulic systems in which a fluid circulates, such as for example steam, carbon dioxide, oil or other fluid, at high working pressures, for example about 20-200 bar, and more particularly at pressures between 100 and 200 bar.

The valves which are used in conditioning systems for automotive applications have to meet the requirements of having very small sizes, in the order of one or two dozens of millimeters in height and a few millimeters in width, withstanding very high pressure without any leakage problems, avoiding the risks of coming out of their seating and ensuring a very long duration in a safe operating condition without breaking or failing.

Known valves are installed in the thermo hydraulic system to allow the selective passage of the fluid through a respective aperture defined by the valve, when the relative stem is in the open condition.

In particular, known valves comprise a first body, relatively fixed, and provided with a circular housing seating, in which a seal is annularly disposed, and a second body, movable with respect to the first fixed body, and mounted sliding on an axial stem of the first body.

The selective sliding of the second body with respect to the first allows to selectively configure the valve between a first closed condition, in which the second body compresses and deforms the seal until it prevents the passage of the fluid completely, and a second open condition in which the second body is distanced from the seal and defines an aperture for the pressurized fluid to pass through.

Known valves also comprise a spring mounted on the stem of the first body, which is conformed to thrust the second body and keep it normally in the closed condition.

The seal is made of hyper elastic material and, as we said, is normally subjected to a deformation by the second body when the valve is in the closed condition.

In some known solutions, the second body has a contact surface with the seal having a conical deformation.

However, the known solution entails a high and uncontrolled deformation due to compression of the seal which, above all, according to its capacity for deformation, also defines the end-of-travel position for the second body, in the closed condition.

US-A-2.960.998 and US-A-4.282.896 disclose valves which for their sizes, application and modus operandi are not designed to be applied in conditioning systems, particularly for the automotive field. Moreover, the seal used in the valves are O-rings of circular cross-section, and, since the elements of the valve are not provided with mating abutment surfaces, the deformability of the seal itself defines the end-of travel position of the movable element with respect to the fixed element. Consequently the seal is highly stressed and its behavior greatly changes during the life time of the valve.

In fact, this uncontrolled compression entails a rapid deterioration, associated with a modification of the relative elastic property of the structure of the seal, which thus tends to lose and change its characteristics of sealing and elasticity, in relatively short times, and eventually breaks.

Moreover, known solutions provide a position of the seal in the relative housing seating in a substantially unconstrained manner, so that, due to the high working pressures, when the valve is open, the pressurized fluid tends to be accidentally displaced, and may even detach the seal.

These disadvantages mainly entail the intervention of specialized workers to carry out extraordinary maintenance with a consequent closure of the thermo hydraulic system.

US-A-2.608.210 discloses a relief valve able to be screwed on a mouth of a cylinder or tank and able to be used for releasing pressure above a predetermined working pressure from the inside of a container. This valve uses a gasket member having a disk-shape which is compressed in the direction of low pressure. In this case, too, the compression of the gasket is not controlled according to a predetermined level of maximum deformation.

DE 511 264 C1 discloses another known valve mechanism used in high-pressure applications.

One purpose of the present invention is to achieve a valve mechanism which reduces to a minimum the deformations due to compression of the seal, guaranteeing an optimum seal and longer duration over time of the seal.

Another purpose of the present invention is to achieve a valve mechanism which, in the open condition, does not risk an accidental displacement or detachment of the seal due to the pressurized fluid.

The Applicant has devised, tested and embodied the present invention to overcome the shortcomings of the state of the art and to obtain these and other purposes and advantages.

SUMMARY OF THE INVENTION

The present invention is set forth and characterized in the independent claim, while the dependent claims describe other characteristics of the invention or variants to the main inventive idea.

In accordance with the above purposes, a valve mechanism according to the present invention is able to be installed in a thermo hydraulic system to allow the selective passage of a pressurized fluid, particularly at high pressures, through a relative pipe.

The mechanism comprises a first body provided with at least a seating in which a seal element is able to be disposed annularly, made of elastomer material, advantageously hyper elastic, and a second body slidingly associated with the first, to define with the latter the pipe for the passage of the pressurized fluid.

The first and second body are selectively movable with respect to each other to define a first closed condition in which the second body, with a conical contact surface, elastically compresses the seal and prevents the passage of the fluid through the pipe, and a second open condition in which the second body is distanced from the seal and allows the pressurized fluid to pass through the pipe.

According to a characteristic feature of the present invention, the first body comprises radial mechanical stop means conformed to define, in the first closed condition, a positioning and abutment flat shoulder for the second body, so as to define a desired end-of-travel position for the second body, which determines a maximum optimized compression condition of the seal. The second body comprises a mating flat abutment able to cooperate with the flat shoulder of the first body in the end-of-travel position.

The seal has a rectangular cross-section shape, with its longer side in the direction of the movement between the first and the second body, so as to be able to be compressed in a controlled way in order to reach a calculated condition of maximum compression allowed in the end-of-travel position of the first and the second bodies.

With the present invention we thus have the seal subjected, in the first closed condition of the valve mechanism, to a controlled maximum elastic deformation such as to guarantee, on the one hand, an optimum seal of the closure effected, and on the other hand such as to limit to a minimum the deformation due to compression suffered by the seal due to the deflection determined by the second body.

In this way, given the same structural characteristics, both in terms of material and in terms of geometric parameters, of the seals used in the state of the art, the seal has a longer duration, thus limiting to a minimum any interventions of extraordinary maintenance to replace or repair the seal.

Advantageously, the radial mechanical stop means is disposed around at least an annular segment of the seal so that, in the second open condition, it functions as a radial retention means for the seal so that the latter cannot accidentally be displaced and/or removed by the pressurized fluid.

According to a preferential embodiment, the radial mechanical stop means has an annular tooth having a determinate height "b", with a flat top surface of abutment, which develops along the direction of reciprocal movement between the first and second body of the valve according to the invention, and on which one end of the second body stops in order to define said first closed condition.

According to a preferred embodiment of the invention, the height b of the annular tooth has a value that varies as a function of the height H of the seal, according to the following mathematical equation:

$$0.05 < b/H < 0.4$$

Applicant has found that this ratio of size between the height b of the tooth and the height H of the seal causes the second body to stop in closing with respect to the first at a height such as to elastically deform the seal, keeping it in optimum conditions of elastic deformation and sealing, without excessively compromising the structural resistance.

Advantageously, the seal of the valve according to the present invention is distanced with respect to a median axis of reciprocal movement of the first and second body by a radius R1, calculated as a function of the height H of the seal, according to the following mathematical equation:

$$1.5 < H/R1 < 3$$

This positioning provides a further contribution to ensure the conditions of ideal compression for the seal.

In the preferred application of the present invention in a conditioning system for automotive appliances, the radius R2 is comprised in a range between 3 and 8 millimeters, whereas the overall height of the valve device is about 20 millimeters.

Advantageously, the radius R2 between the internal surface of the annular flange and the median axis of reciprocal movement also has an optimum value geometrically related with respect to the radius R1 which determines the distance between the median axis and the seal according to the following equation:

## 1.5<R2/R1<3.

In a preferential form of embodiment, the first body comprises a sliding stem, with a diameter, at least in a first segment, equal to twice the radius R1, and on which the seal and the second body are axially inserted, the latter in sliding fashion so as to pass from the first to the second condition.

A helical spring is also axially mounted on the sliding stem, disposed so as to normally keep the second body under pressure against the seal.

### BRIEF DESCRIPTION OF THE DRAWINGS

These and other characteristics of the present invention will become apparent from the following description of a preferential form of embodiment, given as a non-restrictive example with reference to the attached drawings wherein:

- fig. 1 shows a partly sectioned view of a valve mechanism for high pressures according to the present invention;
- fig. 2 is a schematic view of an enlarged detail of the valve mechanism in fig. 1, in a first operating condition;
- fig. 3 is a schematic view of an enlarged detail of the valve mechanism in fig. 1, in a second operating condition.

### DETAILED DESCRIPTION OF A PREFERENTIAL FORM OF EMBODIMENT

With reference to the attached drawings, a valve mechanism or valve 10 according to the present invention is suitable to be installed in a high pressure thermo hydraulic system such as for example a refrigeration system, particularly but not exclusively for automotive appliances, of a known type and not shown in the drawings, in which carbon dioxide ($CO_2$) circulates, or other fluid such as for example oil, at a working pressure of about 20-200 bar.

The valve 10 substantially consists of a first body 11 and a second body 12, mounted reciprocally sliding with respect to a median movement axis X, and able to define between them a pipe 14 for the passage of the fluid, in this case pressurized carbon dioxide.

In particular, the first body 11 is subjected to the high pressures of the fluid and is pushed by the fluid towards the second body 12, which is fixed. When the pressure of the fluid lowers, the first body 11 moves in the opening condition and this movement of closure/opening is repeated for a great number of cycles during the service life of the valve mechanism 10.

The valve 10 also comprises a seal 13, substantially annular in shape, with a substantially rectangular cross-section, having a determinate height "H", made of hyper elastic material and disposed in a respective housing seating 15 made on the first body 11, so that its height H extends substantially parallel to the movement axis X.

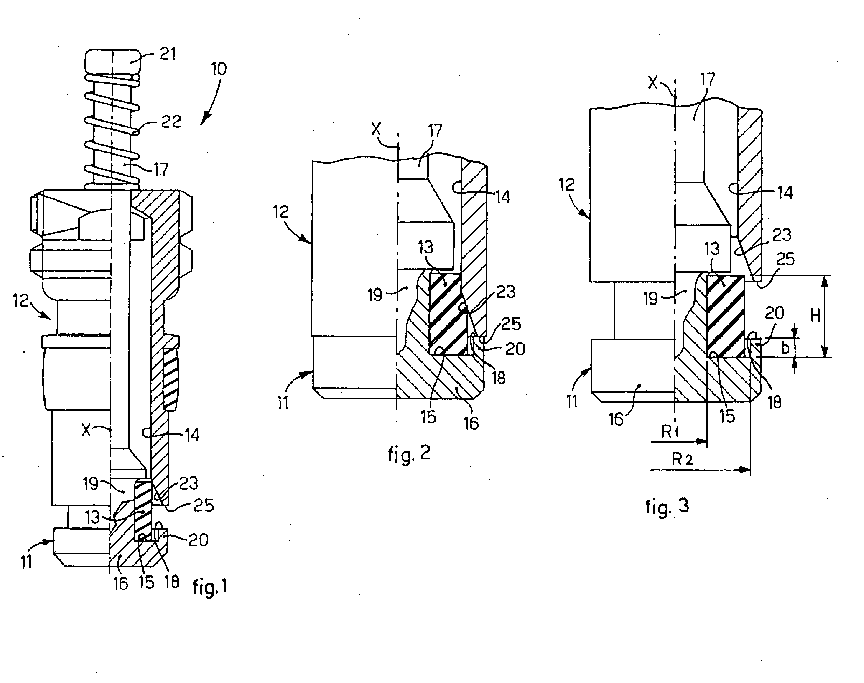

The first body 11 and the second body 12 are reciprocally movable as a function of determinate operating conditions, so as to selectively configure the valve 10 between a first closed condition (fig. 2), in which the second body 12 compresses the seal 13 under pressure and closes the pipe 14, preventing the passage of the carbon dioxide, and a second open condition (fig. 3), in which the second body 12 is distanced from the seal 13 and allows the carbon dioxide to pass through the pipe 14.

The first body 11 comprises a base disk 16 on which a part of the housing seating 15 for the seal 13 is made, and from which, coaxially with the movement axis X, a sliding stem 17 extends, on which the second body 12 is slidingly mounted, to allow reciprocal movement between the aforesaid two operating conditions.

The base disk 16 also comprises, in a perimeter zone, a raised annular tooth 20 disposed around an external segment of the seal 13.

The annular tooth 20 extends for a height "b" in a direction substantially parallel to the movement axis X, and is able to define frontally a stop surface 18.

The height b of the annular tooth 20 is chosen as a function of the height H of the seal 13 and, in the preferential embodiment shown here, its ratio with the height H is comprised between about 0.05 and about 0.4.

The stem 17 comprises a terminal part 19 adjacent to the base disk 16 on which a second part of the housing seating 15 is made. The second part of the housing seating 15 is distanced from the movement axis X by a radius R1 which is again calculated as a function of the height H of the seal 13. In particular, the ratio between the height H and the radius R1 is preferably comprised in this case between about 1.5 and about 3.

The internal surface of the annular tooth 20 is made at a radius R2 from the movement axis X, which radius R2 is defined as a ratio to the radius R1, and in particular said ratio is advantageously comprised between about 1.5 and about 3.

The stem 17 also comprises, in correspondence with one free end, a circular shoulder block 21, with respect to which a respective end of a helical spring 22 is attached, mounted coaxial on the stem 17.

The helical spring 22 is disposed with the other end in contact with the second body 12, so as to keep the latter normally under pressure against the seal 13, in the first operating condition.

The second body 12 comprises a conical pressure surface 23, made in correspondence with one free end and facing the annular tooth 20. The pressure surface 23 is conformed to contact and deform the seal 13.

The second body 12 also comprises, again made on the free end, a substantially flat contact surface 25 which, due to the effect of the pressure exerted by the helical spring 22 in the first closed condition, is normally held in contact with the mating and substantially flat stop surface 18 of the annular tooth 20.

In this way the invention guarantees a determinate known positioning in height of the second body 12 with respect to the first body 11 and consequently a determinate and calculated pressure and elastic deformation of the seal 13, according to determinate parameters, accurately calculated and therefore previously known, which guarantee an optimum seal against the passage of the pressurized carbon dioxide and also reduced wear of the seal 13.

It is clear, however, that modifications and/or additions of parts may be made to the valve 10 as described heretofore, without departing from the scope of the present invention.

**Claims**

1. Valve mechanism for a thermo hydraulic system in which a pressurized fluid circulates, particularly at high pressure in the range of 20-200 bar, particularly 100-200 bar, said mechanism (10) comprising a first body (11) provided with at least a housing seating (15) in which a seal element (13) of elastomer material is disposed, and a second body (12) associated slidingly with said first body (11) and defining with said first body (11) at least a pipe (14) through which said pressurized fluid passes, said first body (11) and said second body (12) being reciprocally movable to define a first closed condition in which said second body (12) elastically compresses said seal element (13) and prevents the passage of said fluid through said pipe (14), and a second open condition in which said second body (12) is distanced from said seal element (13) and allows said fluid to pass through said pipe (14), **characterized in that** said first body (11) comprises a base disk (16) on which a part of the housing seating (15) for said seal element (13) is made, and radial mechanical stop means (20) able, in said first closed condition, to define a raised and end-of-travel annular tooth (20) defining a flat abutment surface (18) for a complementary flat abutment surface (25) of said second body (12), wherein said annular tooth (20) has a height (b) with respect to the base of said seating (15) that is a function of the height (H) of said seal element (13), said heights (b) and (H) being in the direction of the movement axis (X) of the reciprocal movement between the first (11) and the second (12) body, the ratio between said height (b) of said annular tooth (20) and said height (H) of said seal element (13) being comprised between about 0.05 and about 0.4 so as to obtain a controlled maximum allowed compression of said seal element (13), and wherein said seal element (13) has a rectangular cross-section shape with the long side in the direction of movement between the two bodies (11, 12) so as to be deformed at a maximum in a controlled and known way in the end-of-travel position of said second body (12) with respect to said first body (11).

2. Valve mechanism as in claim 1, **characterized in that** said mechanical stop means (20) is disposed annularly around said seal element (13) and is able, in said second open condition, to function possibly as a lateral retaining element for said seal element (13).

3. Valve mechanism as in any claim hereinbefore, **characterized in that** said seal element (13) is distanced from said axis of reciprocal movement (X) by a first radius (R1) having a value correlated to the height (H) of said seal element (13), so that the ratio between said height (H) of said seal element (13) and said first radius (R1) is comprised between about 1.5 and about 3.

4. Valve mechanism as in claim 3, **characterized in that** said annular tooth (20) is distanced from said axis of reciprocal movement (X) by a second radius (R2) having a value correlated to said first radius (R1), so that the ratio between said second radius (R2) and said first radius (R1) is comprised between about 1.5 and about 3.

5. Valve mechanism as in any claim hereinbefore, **characterized in that** said second body (12) comprises a conical pressure surface (23) and made in correspondence with a free end facing said annular tooth (20).

6. Valve mechanism as in any claim hereinbefore, **characterized in that** said first body (11) comprises a sliding stem (17) on which said second body (12) is slidingly mounted.

7. Valve mechanism as in any claim hereinbefore, **characterized in that** it comprises an elastic element (22) associated with said first body (11) and able to cooperate with said second body (12) to keep it normally in said first closed condition.

8. Valve mechanism as in claims **6** and **7**, **characterized in that** said elastic element (22) is associated with said sliding stem (17).

**Patentansprüche**

1. Ventilmechanismus für ein thermohydraulisches System, in dem ein unter Druck stehendes Fluid zirkuliert, vorzugsweise unter hohem Druck im Bereich von 20-200 bar, insbesondere 100-200 bar, wobei der Mechanismus (10) einen ersten Körper (11), der mit wenigstens einem Gehäusesitz (15), in dem ein Dichtelement (13) aus Elastomermaterial angeordnet ist, und einen zweiten Körper (12) umfasst, der verschiebbar mit dem ersten Körper (11) in Verbindung steht und mit dem ersten Körper (11) wenigstens ein Rohr (14) umgrenzt, durch das das unter Druck stehende Fluid durchtritt, wobei der erste Körper (11) und der zweite Körper (12) wechselseitig bewegbar sind, um einen ersten geschlossenen Zustand, in dem der zweite Körper (12) das Dichtelement (13) elastisch zusammendrückt und das Durchtreten des Fluids durch das Rohr (14) verhindert, und einen zweiten offenen Zustand zu definieren, in dem sich der zweite Körper (12) in Abstand von dem Dichtelement (13) befindet und das Durchtreten des Fluids durch das Rohr (14) gestattet, **dadurch gekennzeichnet, dass** der erste Körper (11) eine Basisscheibe (16), an der ein Teil des Gehäusesitzes (15) für das Dichtelement (13) ausgeführt ist, und ein radiales mechanisches Stoppmittel (20) umfasst, das in der Lage ist, in dem ersten geschlossenen Zustand einen angehobenen und ringförmigen Verfahrwegende-Zahn (20) zu definieren, welcher eine flache Anschlagfläche (18) für eine komplementäre flache Anschlagfläche (25) des zweiten Körpers (12) definiert, wobei der ringförmige Zahn (20) eine Höhe (b) in Bezug auf die Basis des Sitzes (15) hat, die abhängig von der Höhe (H) des Dichtelements (13) ist, wobei die Höhen (h) und (H) in der Richtung der Bewegungsachse (X) der wechselweisen Bewegung zwischen dem ersten (11) und dem zweiten (12) Körper sind, wobei das Verhältnis zwischen der Höhe (b) des ringförmigen Zahns (20) und der Höhe (H) des Dichtelements (13) zwischen etwa 0,05 und etwa 0,4 enthalten ist, um eine kontrollierte maximale zugelassene Kompression des Dichtelements (13) zu erhalten, und wobei das Dichtelement (13) eine rechteckförmige Querschnittsgestalt mit der langen Seite in der Bewegungsrichtung zwischen den beiden Körpern (11, 12) aufweist, so dass es maximal auf kontrollierte und bekannte Weise in der Verfahrwegende-Position des zweiten Körpers (12) in Bezug auf den ersten Körper (11) deformiert wird.

2. Ventilmechanismus nach Anspruch 1, **dadurch gekennzeichnet, dass** das mechanische Anschlagelement (20) ringförmig um das Dichtelement (13) angeordnet ist und in dem zweiten offenen Zustand in der Lage ist, möglicherweise als seitliches Halteelement für das Dichtelement (13) zu fungieren.

3. Ventilmechanismus nach einem beliebigen vorhergehenden Anspruch, **dadurch gekennzeichnet, dass** sich das Dichtelement (13) in einem Abstand von der Achse der wechselweisen Bewegung (X) mit einem ersten Radius (R1) befindet, der einen mit der Höhe (H) des Dichtelements (13) in Zusammenhang stehenden Wert hat, so dass das Verhältnis zwischen der Höhe (H) des Dichtelements (13) und dem ersten Radius (R1) zwischen etwa 1,5 und etwa 3 enthalten ist.

4. Ventilmechanismus nach Anspruch 3, **dadurch gekennzeichnet, dass** sich der ringförmige Zahn (20) in einem Abstand von der Achse der wechselweisen Bewegung (X) mit einem zweiten Radius (R2) befindet, der einen mit dem ersten Radius (R1) in Zusammenhang stehenden Wert hat, so dass das Verhältnis zwischen dem zweiten Radius (R2) und dem ersten Radius (R1) zwischen etwa 1, 5 und etwa 3 enthalten ist.

5. Ventilmechanismus nach einem beliebigen vorhergehenden Anspruch, **dadurch gekennzeichnet, dass** der zweite Körper (12) eine konische Druckfläche (23) umfasst, die entsprechend einem dem ringförmigen Zahn (20) gegenüberliegenden freien Ende ausgeführt ist.

6. Ventilmechanismus nach einem beliebigen vorhergehenden Anspruch, **dadurch gekennzeichnet, dass** der erste Körper (11) einen Gleitschaft (17) umfast, auf dem der zweite Körper (12) verschiebbar angebracht ist.

7. Ventilmechanismus nach einem beliebigen vorhergehenden Anspruch, **dadurch gekennzeichnet, dass** er ein elastisches Element (22) umfasst, das mit dem ersten Körper (11) in Verbindung steht und in der Lage ist, mit dem zweiten Körper (12) zusammenzuwirken, um ihn normalerweise in dem geschlossenen Zustand zu halten.

8. Ventilmechanismus nach Anspruch 6 und 7, **dadurch gekennzeichnet, dass** das elastische Element (22) mit dem Gleitschaft (17) in Verbindung steht.

## Revendications

1. Mécanisme de vanne pour un système thermo-hydraulique dans lequel circule un fluide mis sous pression, en particulier à une pression élevée dans la plage de 20 à 200 bar, en particulier de 100 à 200 bar, ledit mécanisme (10) comportant un premier corps (11) muni d'au moins un appui de logement (15) dans lequel est disposé un organe d'étanchéité (13) en matière élastomère, et un second corps (12) associé audit premier corps (11) de manière coulissante et définissant avec ledit premier corps (11) au moins un conduit (14) à travers lequel passe ledit fluide mis sous pression, ledit premier corps (11) et ledit second corps (12) étant mobiles l'un par rapport à l'autre pour définir un premier état fermé dans lequel ledit second corps (12) comprime élastiquement ledit organe d'étanchéité (13) et empêche le passage dudit fluide à travers ledit conduit (14), et un second état ouvert dans lequel ledit second corps (12) est écarté dudit organe d'étanchéité (13) et permet audit fluide de passer à travers ledit conduit (14), **caractérisé en ce que** ledit premier corps (11) comporte un disque de base (16) sur lequel est fabriquée une partie de l'appui de logement (15) pour ledit organe étanchéité, et des moyens d'arrêt mécaniques radiaux (20) pouvant, dans ledit premier état fermé, définir une dent annulaire surélevée et de fin de course (20) définissant une surface de butée plate (18) pour une surface de butée plate complémentaire (25) dudit second corps (12), dans lequel ladite dent annulaire (20) présente une hauteur (b) par rapport à la base dudit appui (15) qui est fonction de la hauteur (H) dudit organe d'étanchéité (13), lesdites hauteurs (b) et (H) étant dans la direction de l'axe de mouvement (X) du mouvement relatif entre les premier (11) et second (12) corps, le rapport entre ladite hauteur (b) de ladite dent annulaire (20) et ladite hauteur (H) dudit organe d'étanchéité (13) étant compris entre environ 0,05 et environ 0,4 de manière à obtenir une compression autorisée maximale commandée dudit organe d'étanchéité (13), et dans lequel ledit organe d'étanchéité (13) a une forme de section transversale rectangulaire avec le côté long dans la direction de mouvement entre les deux corps (11, 12) de manière à être déformé à un maximum de manière commandée et connue dans la position de fin de course dudit second corps (12) par rapport audit premier corps (11).

2. Mécanisme de vanne selon la revendication 1, **caractérisé en ce que** lesdits moyens d'arrêt mécaniques (20) sont disposés de manière annulaire autour dudit organe d'étanchéité (13) et peuvent, dans ledit second état ouvert, fonctionner éventuellement comme un organe de retenue latérale pour ledit organe d'étanchéité (13).

3. Mécanisme de vanne selon l'une quelconque des revendications ci-dessus, **caractérisé en ce que** ledit organe d'étanchéité (13) est écarté dudit axe de mouvement de va-et-vient (X) d'un premier rayon (R1) ayant une valeur corrélée à la hauteur (H) dudit organe d'étanchéité (13), de sorte que le rapport entre ladite hauteur (H) dudit organe d'étanchéité (13) et ledit premier rayon (R1) est compris entre environ 1,5 et environ 3.

4. Mécanisme de vanne selon la revendication 3, **caractérisé en ce que** ladite dent annulaire (20) est écartée dudit axe de mouvement de va-et-vient (X) d'un second rayon (R2) ayant une valeur corrélée audit premier rayon (R1), de sorte que le rapport entre ledit second rayon (R2) et ledit premier rayon (R1) est compris entre environ 1,5 et environ 3.

5. Mécanisme de vanne selon l'une quelconque des revendications ci-dessus, **caractérisé en ce que** ledit second corps (12) comporte une surface de pression conique (23) et mise en correspondance avec une extrémité libre dirigée vers ladite dent annulaire (20).

6. Mécanisme de vanne selon l'une quelconque des revendications ci-dessus, **caractérisé en ce que** ledit premier corps (11) comporte une tige coulissante (17) sur laquelle ledit second corps (12) est monté de manière coulissante.

7. Mécanisme de vanne selon l'une quelconque des revendications ci-dessus, **caractérisé en ce qu'**il comporte un organe élastique (22) associé audit premier corps (11) et pouvant coopérer avec ledit second corps (12) pour le maintenir normalement dans ledit premier état fermé.

8. Mécanisme de vanne selon les revendications 6 et 7, **caractérisé en ce que** ledit organe élastique (22) est associé à ladite tige coulissante (17).

fig. 3

fig. 2

fig. 1

**EP 1 878 957 B1**

## REFERENCES CITED IN THE DESCRIPTION

**Patent documents cited in the description**

- US 2960998 A
- US 4282896 A
- US 2608210 A
- DE 511264 C1